# EUROPEAN PATENT APPLICATION

(11) **EP 4 477 502 A1**
(43) Date of publication of application: **18.12.2024**
(21) Application number: 23842108.5
(22) Date of filing: 30.06.2023
(51) Int. Cl.: B62D 25/08, B60R 13/08

(54) **COWL ASSEMBLY**

(30) Priority: 20.07.2022 CN 202210864141
(71) Applicant: Voyah Automobile Technology Company Ltd., Hanyang District Wuhan City, Hubei 430050 (CN)
(72) Inventor: LI, Pan, Wuhan, Hubei 430050 (CN); QIU, Xiaolin, Wuhan, Hubei 430050 (CN); YUN, Tao, Wuhan, Hubei 430050 (CN); HOU, Chunsheng, Wuhan, Hubei 430050 (CN); HUANG, Bo, Wuhan, Hubei 430050 (CN); ZHAO, Quan, Wuhan, Hubei 430050 (CN); YUAN, Dong, Wuhan, Hubei 430050 (CN); XIE, Wenyun, Wuhan, Hubei 430050 (CN); ZHAO, Fuwei, Wuhan, Hubei 430050 (CN); LIU, Xiangjie, Wuhan, Hubei 430050 (CN)
(74) Representative: Valet Patent Services Limited
(86) International application number: PCT/CN2023/105309
(87) International publication number: WO 2024/017043

(57) **Abstract**

The application provides a front dash-board assembly, comprising a front dash board (100), a front-windshield cover (200), a sound insulation pad ( 300 ), and a plurality of connection members. The front-windshield cover (200) is fixedly disposed at an upper edge of the front dash board (100). An upper end surface of the front-windshield cover (200) is provided with a plurality of installation portions which are sequentially disposed at an interval along a length direction. The installation portion is provided with a sinking-descending groove (201) or an installation slope (202) which faces a cab. The sound insulation pad (300) covers a junction between the front-windshield cover ( 200 ) and the front dash board ( 100 ). The plurality of connecting members correspond one-to-one to the plurality of installation portions . The connection member is connected to the installation portion to fix the sound insulation pad (300) on the front-windshield cover ( 200 ).

## Description

### CROSS-REFERENCE TO RELATED APPLICATIONS

This application claims the priority to Chinese patent application No. 202210864141.2 filed on July 20, 2022, the entire content of which is incorporated herein by reference.

### TECHNICAL FIELD

The application relates to the technical field of a front dash-board structure for a vehicle, and in particular to a front dash-board assembly.

### BACKGROUND

A front-windshield cover and a front dash board of a vehicle are generally spot welded together due to limitations of stamping technology, and there is a gap at a welding edge. Therefore, a noise in a front compartment can easily be transmitted to a cab through the gap at the welding edge. In a vehicle of a traditional model, the welding edge is only sealed by spot welding and coating PVC glue sealant, thereby leading to a poor noise insulation performance and poor NVH (Noise Vibration Harshness ) performance of the vehicle.

### SUMMARY

The application aims to at least to some extent solve a technical problem that a noise is easily transmitted between the existing front-windshield cover and front dash board, resulting in a poor NVH performance of a vehicle. To this end, a front dash-board assembly is provided.

According to some embodiments of the application, a front dash-board assembly is provided, comprising: a front-windshield cover, fixedly disposed at an upper edge of the front dash board, wherein a plurality of installation portions are sequentially disposed at an interval at an upper end surface of the front-windshield cover along a length direction, and wherein the plurality of installation portions comprises a first installation portion, a second installation portion, a third installation portion and a fourth installation portion which are sequentially disposed at an interval, and wherein the second installation portion located at a middle portion of the front-windshield cover is provided with a sinking-descending groove, and remaining installation portions are provided with installation slopes facing the cab, an angle between the installation slope and a corresponding tangent plane of the front windshield being not less than 90°; a sound insulation pad, covering a junction between the front-windshield cover and the front dash board; and a connection member, wherein a plurality of the connection members correspond one-to-one to a plurality of the installation portions, and wherein the connection member is connected to the installation portion to fix the sound insulation pad on the front-windshield cover.

### BRIEF DESCRIPTION OF DRAWINGS

In order to more clearly illustrate the technical solutions of the embodiments of the application, the accompanying drawings required for use in the embodiments will be briefly introduced below. It should be understood that the following accompanying drawings only show some embodiments of the application and therefore should not be regarded as limiting the scope sought for by the application. For those skilled in the art, other related accompanying drawings can be obtained based on these accompanying drawings without paying creative work.
FIG. 1 is a schematic three-dimensional structural diagram of a front dash-board assembly according to some embodiments of the application;
FIG. 2 is a schematic structural diagram of the front dash-board assembly in FIG. 1 covered with a sound insulation pad;
FIG. 3 is a schematic three-dimensional structural diagram of a front-windshield cover in FIG. 1; and
FIG. 4 is a schematic three-dimensional structural diagram of the front-windshield cover in FIG. 3 from another angle of view.

Reference numerals: 100, front dash board; 200, front-windshield cover; 201, sinking-descending groove; 202, installation slope; 203, windshield installation plate; 204, flanging; 210, first installation portion; 220, second installation portion; 230, third installation portion; 240, fourth installation portion; 300, sound insulation pad; 400, stud.

### DESCRIPTION OF EMBODIMENTS

The technical solutions in the embodiments of the application will be clearly and completely described below in conjunction with the accompanying drawings in the embodiments of the application. Obviously, the described embodiments are only some embodiments of the application, rather than all the embodiments. Based on the embodiments in the application, all other embodiments obtained by those skilled in the art without making any creative work shall fall within the scope sought for by the application.

Furthermore, the application may repeat reference numerals and / or reference letters in different examples. Such repetition is for the purpose of simplicity and clarity and does not in itself indicates a relationship between the various embodiments and / or arrangements discussed. Furthermore, the application provides examples of various specific processes and materials, but those skilled in the art may recognize an application of other processes and / or a use of other materials.

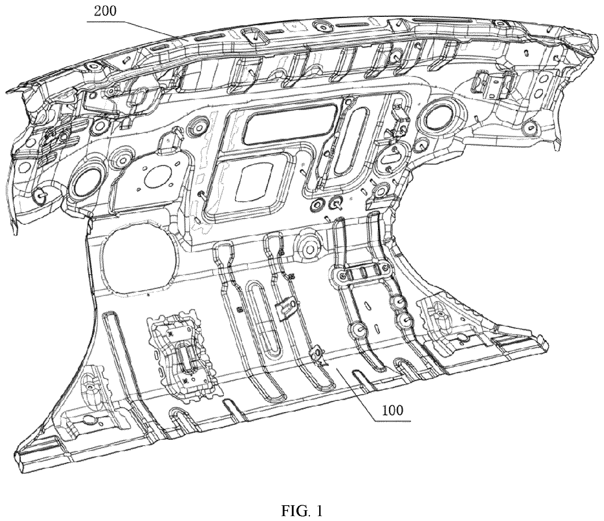

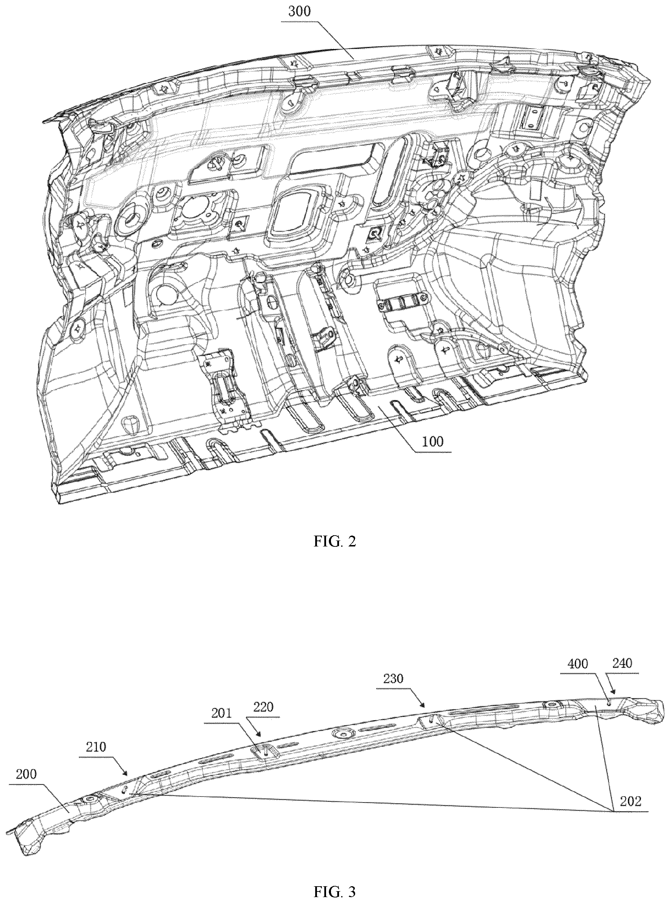

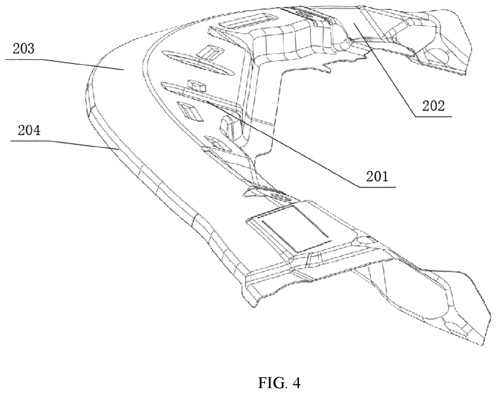

FIG. 1 is a schematic three-dimensional structural diagram of a front dash-board assembly according to some embodiments of the application; FIG. 2 is a schematic structural diagram of the front dash-board assembly in FIG. 1 covered with a sound insulation pad; FIG. 3 is a schematic three-dimensional structural diagram of a front-windshield cover in FIG. 1; and FIG. 4 is a schematic three-dimensional structural diagram of the front-windshield cover in FIG. 3 from another angle of view.

The application is described below with reference to the embodiments and in conjunction with the accompanying drawings.

As shown in FIG. 1, FIG. 2, FIG. 3 and FIG. 4, a front dash-board assembly is provided according to some embodiments of the application, which may include a front dash board 100, a front-windshield cover 200, a sound insulation pad 300 and a connection member, to reduce a noise transmitted from a front compartment to a cab. The front-windshield cover 200 is fixedly disposed at an upper edge of the front dash board 100. The front-windshield cover 200 is generally fixed on the front dash board 100 by spot welding. Weld seams are distributed throughout the upper edge of the front dash board 100. The sound insulation pad 300 covers a junction between the front-windshield cover 200 and the front dash board 100, that is, the sound insulation pad 300 covers the weld joints. The sound insulation pad 300 covers most of the weld joints and thus has a good sound insulation effect, thereby improving a NVH performance of the cab. It is understandable that when the front-windshield cover 200 and the front dash board 100 are connected in other ways so that there is a gap or a weak junction between the front dash board 100 and the front-windshield cover 200, some embodiments of the application may also be applied to reduce a noise from the front compartment.

An upper end surface of the front-windshield cover 200 may be provided with a plurality of installation portions which are spaced apart in sequence along a length direction. Various installation portions may correspond one-to-one to the connection members, and the installation portions cooperate with the connection members to fix the sound insulation pad 300 on the front-windshield cover 200. In order to ensure a sound insulation effect of the sound insulation pad 300, the sound insulation pad 300 may be shaped, so that the sound insulation pad 300 fits into a portion of rear side walls of the front-windshield cover 200 and the front dash board 100, thereby reducing a gap between the sound insulation pad 300 and the front-windshield cover 200, and a gap between the sound insulation pad 300 and the front dash board 100, and improving the sound insulation effect. In some embodiments, the rear side wall of the front dash board 100 is a side wall of the front dash board 100 facing the cab. In some embodiments, the installation portion is provided with a sinking-descending groove 201 or an installation slope 202 which faces the cab. An orientation of the connection member and a position of a top end of the connection member can be changed through the sinking-descending groove 201 or the installation slope 202, such that a distance between the sound insulation pad 300 and a front windshield is increased to prevent the sound insulation pad 300 from interfering with the front windshield and affecting the assembly of the front windshield. In this way, the sound insulation pad 300 is ensured to be tightly connected to the front dash-board assembly, while an influence of the connection members on an installation of the front windshield is reduced.

In some embodiments, an upper end surface of the front-windshield cover 200 may be provided with a plurality of installation portions that are spaced apart in sequence along a length direction. Various installation portions may correspond one-to-one to the connection members, and the installation portions cooperate with the connection member to fix the sound insulation pad 300 on the front-windshield cover 200. Thus, the plurality of installation portions along the length direction of the upper end surface of the front-windshield cover 200 can be easily identified during an assembly process, which is conductive to improving an assembly efficiency and preventing assembly errors. Since the sound insulation pad 300 has a large coverage area and can extend upward to connect to an edge of the front windshield, various components can be easily identified in appearance during an assembly operation of the sound insulation pad 300, thereby facilitating improving the assembly efficiency and preventing assembly errors.

In addition, since the installation portion which has the sinking-descending groove 201 or the installation slope 202 does not accumulate air during electrophoretic painting, a surface of the front-windshield cover 200 is smooth, so that the front-windshield cover 20 can fit closely with the sound insulation pad 300 to obtain a better sound insulation effect.

In some embodiments, among the plurality of installation portions, the installation portion located at a middle portion of the front-windshield cover 200 is provided with a sinking-descending groove 201, and remaining installation portions are provided with the installation slopes 202 facing the cab. A bottom of the sinking-descending groove 201 is lower than the installation slope 202. When the connection member is connected to the sinking-descending groove 201, the connection member will not protrude too much from the sinking-descending groove 201, thereby facilitating an assembly of the front windshield. The front windshield is disposed to tilt on the front-windshield cover 200, and when the installation slope 202 is connected to the connecting member, the connecting member is also tilted toward the cab to stay away from the front windshield. In some embodiments, an angle between the installation slope 202 and a corresponding tangent plane of the front windshield is not less than 90°, that is, when the connection member is connected to the installation portion, a top of the connection member faces the cab and an axis of the connection member is parallel to the corresponding tangent plane of the front windshield, or a distance between the axis of the connection member and the windshield gradually increases in a direction away from the front-windshield cover 200, so as to further reduce an influence of the connection member on the assembly of the front windshield.

Referring to FIG. 1 and FIG. 3, in some embodiments, the front-windshield cover 200 may include a first installation portion 210, a second installation portion 220, a third installation portion 230 and a fourth installation portion 240 which are sequentially disposed at an interval. The first installation portion 210, the third installation portion 230 and the fourth installation portion 240 each have installation slopes 202 which face the cab. The second installation portion 220 is provided with the sinking-descending groove 201. Taking into account a subsequent installation of mechanisms such as an operating console, an instrument panel and so on, in some embodiments of the application, the second installation portion 220 is disposed at a middle portion of the upper end surface of the front-windshield cover 200, and the first installation portion 210 is disposed in front of a driver seat to reserve an installation position for the instrument panel. Generally, no other mechanism is installed in front of a co-pilot seat. Therefore, the third installation portion 230 and the fourth installation portion 240 may be disposed in front of the co-pilot seat at an interval to increase a tightness of a connection between the sound insulation pad 300 which is in front of the co-pilot seat and the front-windshield cover 200.

Referring to FIG. 3 and FIG. 4, the upper end surface of the front-windshield cover 200 is wide in the middle portion and narrow at both ends. In some embodiments, in order to ensure an inclination angle of the installation slope 202, the installation slopes 202 of two installation portions in which one installation portion is located at head portion and one installation portion is located at tail portion are both connected to the junction between the front-windshield cover 200 and the front dash board 100. The installation slope 202 and the weld seam have a smooth transition therebetween, which can ensure that the installation portion does not accumulate air during electrophoretic painting and ensure that the front-windshield cover 200 has a smooth surface and is easy to stick to the sound insulation pad 300.

Screw holes may be provided on the installation slope 202 or the sinking-descending groove 201, such that bolts may be used as connecting members. An installation of the sound insulation pad 30 may be completed by threading the bolts and the screw hole. However considering that an opening of the screw holes increases a gap between the front compartment and the cab to a certain extent, in some embodiments of the application, the connection members may include studs 400 and nuts, an end of the stud 400 is welded to the installation slope 202, and an angle between the stud 400 and a horizontal plane is an acute angle. The sound insulation pad 300 is provided with a plurality of through holes corresponding one-to-one to the studs 400, and the sound insulation pad 300 is locked between the installation slope 202 and the nuts by the nuts.

In some embodiments, in order to facilitate operators to weld the studs 400, a welding positioning point matching with an end face of the stud 400 is provided on each installation slope 202 or in the sinking-descending groove 201. The welding positioning point may be a circular groove or a protruding circular ring, and an inner diameter of the circular ring is not less than an outer diameter of the stud 400.

Referring to FIG. 4, a side of the front-windshield cover 200 is connected to the front dash board 100, and another side of the front-windshield cover 200 is provided with a windshield installation plate 203. The sound insulation pad 300 is connected to an edge of the windshield installation plate 203 to increase a coverage area of the sound insulation pad 300, thereby further improving the isolation effect for a noise from the front compartment and improving the NVH performance of the vehicle.

Referring to FIG. 4, in some embodiments, the windshield installation plate 203 is an inclined surface. A side of the windshield installation plate 203 opposite to the front-windshield cover 200 is provided with a flanging 204 facing a bottom plate of the vehicle body. The flanging 204 can increase a strength of the windshield installation plate 203, thereby reducing a separation of the sound insulation pad 300 from the front-windshield cover 200 caused by a shaking of the front-windshield cover 200 during driving, and thereby improving the NVH performance of the vehicle under extreme road conditions.

In some embodiments, the front dash board 100 is integrally formed, that is, there are no weld seams on the front dash board 100, which can reduce defects of poor sealing of the front compartment caused by segmentation, and the noise from the front compartment is not easily transmitted to the cab through the front dash board 100. Of course, it can be understood that an integrally formed front dash board 100 has high strength, and the front dash board 100 itself is not prone to shaking and generating abnormal noise, thus the NVH performance of the vehicle can be further enhanced and a riding experience of passengers can be improved.

In some embodiments, the integrally formed front dash board 100 may be formed by stamping a sheet metal. During a process of obtaining the front dash board 100 by one-piece molding, a cost of processing tools such as molds and fixtures can be significantly reduced. An assembly cost required for a split type of front dash board is saved. In addition, the connection members or connecting structures required for the split type of front dash board are omitted, such that an overall weight of the integrally formed front dash board 100 is significantly reduced.

The technical solutions according to some embodiments of the application have at least the following advantageous effects: it can be seen from the above technical solutions that in the front dash-board assembly provided by the application, the sound insulation pad is installed on the front-windshield cover through connection members to cover the junction between the front-windshield cover and the front dash board; the sound insulation pad covers a large area and has a good sound insulation effect, which can improve the NVH performance of the cab; in addition, the installation slopes or sinking-descending grooves disposed at the plurality of installation portions can avoid an interference with the front windshield and affecting the assembly of the front windshield, while the tightness of the junction between the sound insulation pad and the front-windshield cover can be ensured.

In the application, unless otherwise clearly specified and limited, a first feature being " on " or " under " a second feature may include the first and second features being in direct contact, or may include the first and second features not being in direct contact but being in contact through another feature between them. Moreover, a first feature being " over", " above " and " on "a second feature includes the first feature being directly above and obliquely above the second feature, or simply indicates that the first feature is horizontally higher than the second feature. The first feature being " beneath", " below " and " under " the second feature includes the first feature being directly below and diagonally below the second feature, or simply indicates that the first feature is at a smaller horizontal height than the second feature.

In the description of the application, it should be understood that the terms " center ", " longitudinal", " lateral ", " length "," width ", " thickness ", " up ", " down", " front", " back "," left ", " right ", " vertical "," horizontal ", " top ", " bottom "," inside ", " outside ", " clockwise " and " counterclockwise " indicate orientations or positional relationships based on the orientations or positional relationships shown in the accompanying drawings, which are only for the convenience of describing the application and simplifying the description, and do not indicate or imply that the referred device or element must have a specific orientation, be constructed and operated in a specific orientation, and therefore should not be understood as a limitation on the application.

It should be noted that all directional indications in the embodiments of the application are only used to explain the relative position relationship, movement status and so on between the components in a certain specific posture. If the specific posture changes, the directional indication will also change accordingly.

In the application, unless otherwise clearly specified and limited, the terms " connection ", " fix " and the like should be understood in a broad sense. For example, " fix" can be a fixed connection, a detachable connection, or an integral connection; it can be a mechanical connection or an electrical connection; it can be a direct connection or an indirect connection through an intermediate medium; it can be an internal connection of two elements or an interaction relationship between two elements, unless otherwise clearly defined. For those skilled in the art, the specific meanings of the above terms in this disclosure can be understood according to specific circumstances.

In addition, descriptions such as " first ", " second " and the like in the application are only used for descriptive purposes and cannot be understood as indicating or implying their relative importance or implicitly indicating the number of the indicated technical features. Therefore, the features defined as " first " and " second " may explicitly or implicitly include one or more the above features. In the description of the application, " plurality " means two or more than two, unless otherwise clearly and specifically defined.

In the description of this specification, reference terms such as " one embodiment", " some embodiments ", " example ", " specific example ", or " some examples " indicate that the specific features, structures, materials or characteristics described in conjunction with the embodiment or example are included in at least one embodiment or example of the application. In the present specification, the exemplary expressions of the above terms do not necessarily refer to the same embodiment or example. Furthermore, the specific features, structures, materials, or characteristics described may be combined in any suitable manner in any one or more embodiments or examples. Furthermore, those skilled in the art may combine and couple different embodiments or examples described in this specification.

In addition, the technical solutions between the various embodiments can be combined with one other, but it must be based on the fact that those skilled in the art can implement it. When the combination of technical solutions is contradictory or cannot be implemented, it should be deemed that such combination of technical solutions does not exist and is not within the scope of protection sought for by this application.

Although embodiments of the application have been shown and described, those skilled in the art will appreciate that various changes, modifications, substitutions and variations may be made to the embodiments without departing from the principles and spirit of the application, the scope of which is sought for by the claims and their equivalents.

## Claims

1. A front dash-board assembly, comprising:
front dash board;
a front-windshield cover, fixedly disposed at an upper edge of the front dash board, wherein a plurality of installation portions are sequentially disposed at an interval at an upper end surface of the front-windshield cover along a length direction; the plurality of installation portions comprises a first installation portion, a second installation portion, a third installation portion and a fourth installation portion which are sequentially disposed at an interval; the second installation portion located at a middle portion of the front-windshield cover is provided with a sinking-descending groove; remaining installation portions are provided with installation slopes facing the cab; and an angle between the installation slopes and corresponding tangent planes of the front windshield is not less than 90°;
a sound insulation pad, covering a junction between the front-windshield cover and the front dash board; and
a plurality of connection members, corresponding one-to-one to a plurality of the installation portions, and connected to the installation portions to fix the sound insulation pad on the front-windshield cover.

2. The front dash-board assembly according to claim 1, wherein among the plurality of installation portions, the installation slopes of two installation portions in which one installation portion is located at head portion and one installation portion is located at tail portion are both connected to the junction between the front-windshield cover and the front dash board.

3. The front dash-board assembly according to claim 1, wherein the connection members comprise a stud and a nut, wherein an end of the stud is welded to the installation slope, and an angle between the stud and a horizontal plane is an acute angle; and wherein the sound insulation pad is provided with a plurality of through holes corresponding one-to-one to the studs, and the sound insulation pad is locked between the installation slope and the nut by the nut.

4. The front dash-board assembly according to claim 3, wherein each installation slope or sinking-descending groove is provided with a welding positioning point matching with an end face of the stud.

5. The front dash-board assembly according to claim 1, wherein a side of the front-windshield cover is connected to the front dash board, and another side of the front-windshield cover is provided with a windshield installation plate, the sound insulation pad being connected to an edge of the windshield installation plate.

6. The front dash-board assembly according to claim 5, wherein the windshield installation plate is an inclined surface, and a side of the windshield installation plate opposite to the front-windshield cover is provided with a flanging facing a bottom plate of the vehicle body.

7. The front dash-board assembly according to claim 1, wherein the front dash board is integrally formed.
